# EUROPÄISCHE PATENTSCHRIFT

(11) **EP 4 253 028 B1**
(45) Veröffentlichungstag und Bekanntmachung des Hinweises auf die Patenterteilung: **09.10.2024**
(21) Anmeldenummer: 23159478.9
(22) Anmeldetag: 01.03.2023
(51) Int. Cl.: B30B 15/34, B30B 9/12, C11B 1/10, C11B 1/06

(54) **VERFAHREN UND VORRICHTUNG ZUR BEREITSTELLUNG VON KÜHL- UND/ODER EXTRAKTIONSMITTELN FÜR MINDESTENS EINE PRESSE SOWIE VORRICHTUNG ZUM PRESSEN**
METHOD AND DEVICE FOR PROVIDING COOLING AND/OR EXTRACTION MEANS FOR AT LEAST ONE PRESS AND DEVICE FOR PRESSING
PROCÉDÉ ET DISPOSITIF DE PRÉPARATION DE MOYENS DE REFROIDISSEMENT ET/OU D'EXTRACTION POUR AU MOINS UNE PRESSE AINSI QUE DISPOSITIF DE PRESSAGE

(30) Priorität: 28.03.2022 DE 102022107203
(43) Veröffentlichungstag der Anmeldung: 04.10.2023
(73) Patentinhaber: Harburg-Freudenberger Maschinenbau GmbH, 21079 Hamburg (DE)
(72) Erfinder: Bille, Maik, 22587 Hamburg (DE); Ikels, Jan, 22589 Hamburg (DE)
(74) Vertreter: Klickow & Wetzel PartGmbB

(56) Entgegenhaltungen:
- CN-A- 114 164 045
- US-A1- 2003 116 034
- US-A1- 2019 366 230
- US-B2- 8 079 304

## Beschreibung

Die Erfindung betrifft eine Vorrichtung zur Bereitstellung von Kühl- und/oder Extraktionsmitteln für mindestens eine Presse, insbesondere für Pressen im Sinne von Extraktionspressen zur Trennung von festen und flüssigen Bestandteilen eines Pressguts.

Weiterhin betrifft die Erfindung eine Vorrichtung zum Pressen, insbesondere im Sinne einer Extraktionspresse, aufweisend eine Vorrichtung zur Bereitstellung von Kühl- und/oder Extraktionsmitteln.

Darüber hinaus betrifft die Erfindung ein Verfahren zur Bereitstellung von Kühl- und/oder Extraktionsmitteln für mindestens eine Presse, insbesondere für Pressen im Sinne von Extraktionspressen zur Trennung von festen und flüssigen Bestandteilen eines Pressguts.

Bei dem mechanischen Pressvorgang in einer Extraktionspresse, beispielsweise ausgebildet als eine Schneckenpresse, entsteht Wärme, die mitunter die Temperatur des Presskuchens und/oder der abgepressten Flüssigkeit so weit erhöht, dass Qualitätsverluste hingenommen werden müssen. Darüber hinaus ist es beispielsweise bei der Gewinnung von Speiseölen mithilfe von Extraktionspresse grundsätzlich erstrebenswert, einen möglichst geringen Restfettgehalt im Presskuchen zu realisieren, der im Umkehrschluss eine hohe Ölausbeute bedeutet.

Es ist bereits bekannt bei der Trennung von flüssigen und festen Bestandteilen eines Pressguts, insbesondere bei dem Abpressen von Ölen aus Ölsaaten, mithilfe einer Extraktionspresse zusätzlich zu der rein mechanischen Extraktion dem Pressgut ein Extraktions- und/oder Kühlmittel hinzuzufügen.

Dadurch ist der Pressvorgang bei geringeren Temperaturen umsetzbar, sodass die Qualität der Produkte erhöht werden kann. Die höhere Viskosität von Ölen bei geringeren Temperaturen erschwert jedoch das Abfließen des Öls aus der Extraktionspresse. Diesem Problem kann durch den Einsatz von Extraktionsmitteln begegnet werden.

Als Extraktionsmittel ist beispielsweise die Verwendung von überkritischem CO2, Isopentan oder n-Butan bekannt.

Gemäß der DE 10 2005 109 294 A1 wird dem Pressgut in einer Schneckenpresse überkritisches Kohlendioxid als Extraktionsmittel zugeführt, das neben einer erheblichen Verringerung der Viskosität des Öls auch für eine Kühlung des Öls und des Presskuchens sorgt.

Als reines Kühlmittel kommt beispielsweise flüssiger Stickstoff infrage.

Aus der US 2019/366230 A1 ist bereits eine Vorrichtung zur Bereitstellung von Kühl- oder Extraktionsmitteln für eine Presse gemäss dem Oberbegriff des Anspruchs 1 bekannt. Ein Speicher für Kohlendioxid ist hierbei mit einer Druckreguliereinrichtung und einer Regeleinrichtung für die Temperatur versehen. Das Kohlendioxid wird unter Verwendung einer Dosiereinrichtung zugeführt.

Aus der CN 114164045 A ist ebenfalls eine derartige Vorrichtung sowie ein zugeordnetes Betriebsverfahren bekannt.

Bekannte Prozesse und Vorrichtungen beim mit überkritischem Kohlendioxid unterstützen Pressen haben große Schwierigkeiten bei der konstanten und fehlerfreien Versorgung der Extraktionspresse oder mehrerer angeschlossener Extraktionspressen mit überkritischem Kohlendioxid. Dadurch ist ein Einsatz in großem industriellem Maßstab in einer Größenordnung von mehr als 5 t verarbeiteten Ölsaaten pro Tag zurzeit nicht möglich.

Es ist daher eine Aufgabe der Erfindung eine verbesserte Vorrichtung zur Bereitstellung von Kühl- und/oder Extraktionsmitteln für mindestens eine Presse bereitzustellen.

Diese Aufgabe wird erfindungsgemäß durch eine Vorrichtung zur Bereitstellung von Kühl- und/oder Extraktionsmitteln für mindestens eine Presse gemäß Patentanspruch 1 gelöst.

Es ist eine weitere Aufgabe der Erfindung eine verbesserte Vorrichtung zum Pressen bereitzustellen.

Diese Aufgabe wird erfindungsgemäß durch eine Vorrichtung zum Pressen gemäß Patentanspruch 10 gelöst.

Darüber hinaus ist es eine Aufgabe der Erfindung ein verbessertes Verfahren zur Bereitstellung von Kühl- und/oder Extraktionsmitteln für mindestens eine Presse anzugeben.

Diese Aufgabe wird erfindungsgemäß durch ein Verfahren gemäß Patentanspruch 13 gelöst.

In den abhängigen Patentansprüchen werden vorteilhafte Ausführungsformen der Erfindung beansprucht.

Die im Folgenden offenbarten Merkmale einer Vorrichtung zur Bereitstellung von Kühl- und/oder Extraktionsmitteln für mindestens eine Presse, einer Vorrichtung zum Pressen und eines Verfahrens zur Bereitstellung von Kühl- und/oder Extraktionsmitteln für mindestens eine Presse sind in allen ausführbaren Kombinationen Bestanteil der Erfindung.

In Ausführungsformen der Erfindung kommen beispielsweise Kohlendioxid, Isopentan oder n-Butan als Extraktionsmittel oder Stickstoff als reines Kühlmittel zum Einsatz.

Erfindungsgemäß werden die Funktionselemente Verteilungseinrichtung, Dosiereinrichtung und Bevorratungseinrichtung in einer Vorrichtung zur Bereitstellung von Kühl- und/oder Extraktionsmittel miteinander kombiniert, um eine zuverlässige und hinreichend genau einstellbare Versorgung mindestens einer Presse mit einem Kühl- und/oder Extraktionsmittel in einem großindustriellen Maßstab zu realisieren.

Die Bevorratungseinrichtung umfasst einen Speicher für das Kühl- und/oder Extraktionsmittel, beispielsweise einen Tank, und ist mit einer Druckreguliereinrichtung verbunden, um den benötigten Druck des Kühl- und/oder Extraktionsmittels für den vorgesehenen Einsatz einzustellen.

In den meisten Anwendungen ist eine Zufuhr des Kühl- und/oder Extraktionsmittels in flüssigem Zustand gewünscht. In Abhängigkeit der jeweils vorgesehenen Zuführtemperatur des Kühl- und/oder Extraktionsmittels ergibt sich dadurch in Abhängigkeit von der jeweiligen Verdampfungstemperatur ein Mindestdruck, damit dieses nicht vor dem Zuführen in die mindestens eine Presse verdampft.

Der Speicher für das Kühl- und/oder Extraktionsmittel weist in Ausführungsformen der Erfindung eine Kühlvorrichtung zur Kühlung des bevorrateten Kühl- und/oder Extraktionsmittels auf.

In bevorzugten Ausführungsformen der Erfindung weist diese eine Kondensationsvorrichtung auf, in die die Kühlvorrichtung integriert ist. In bestimmten Ausführungsformen der Erfindung ist die Kondensationsvorrichtung in den Speicher integriert oder zumindest mit diesem verbunden.

Die Druckreguliereinrichtung ist in Ausführungsformen der Erfindung ein- oder mehrstufig ausgeführt und weist mindestens eine Hochdruckpumpe auf.

Die Hochdruckpumpe ist in Ausführungsformen der Erfindung zur Bereitstellung eines Ausgangsdrucks in einem Bereich von etwa 100 bis 350 bar ausgelegt.

Da die zur Versorgung von mehreren Pressen benötigte Menge an Kühl- und/oder Extraktionsmitteln unter dem erforderlichen Druck mit einzelnen verfügbaren Hochdruckpumpen meist nicht möglich ist, da der Durchsatz der Pumpen mit steigender Druckdifferenz zwischen Eingang und Ausgang der Hochdruckpumpe sinkt, werden in den mehrstufigen Ausführungsformen der Erfindung mindestens zwei Pumpen hintereinander geschaltet, sodass jede einzelne Pumpe nur einen Teil der insgesamt benötigten Druckdifferenz zwischen dem Lagerdruck des Kühl- und/oder Extraktionsmittel in der entsprechenden Bevorratungseinrichtung herstellen muss. Entsprechend können die Hochdruckpumpen höhere Durchsätze realisieren.

In alternativen Ausführungsformen der Erfindung werden Hochdruckpumpen parallel zueinander geschaltet eingesetzt, um den erforderlichen Durchsatz zu realisieren.

In weiteren Ausführungsformen der Erfindung ist auch die Kombination von hintereinander und parallel geschalteten Pumpen / Hochdruckpumpen möglich.

In bevorzugten Ausführungsformen der Erfindung weist die Druckreguliereinrichtung mindestens einen Druckregelkreis auf, um den Druck auf mindestens einer Stufe auf einen Drucksollwert zu regeln. Dazu weist der entsprechende Druckregelkreis eine Druckmesseinrichtung zur Messung eines Druckmesswerts und eine Drucksteuereinrichtung auf, mit der die mindestens eine zugeordnete Hochdruckpumpe und/oder mindestens ein Regelventil zur Einstellung des Druckmesswerts auf den Drucksollwert ansteuerbar ist.

In bevorzugten Ausführungsformen der Erfindung ist die Druckleitung für das Extraktions- und/oder Kühlmittel hinter der ersten Stufe der Druckreguliereinrichtung mit einer Rückführleitung zum Extraktions- und/oder Kühlmitteltank verbunden.

Dadurch lassen sich zwei technische Probleme lösen. Zum einen muss die mindestens eine Hochdruckpumpe zum Anfahren langsam heruntergekühlt werden, wobei eine ungewollte Gasphase des Extraktions- und/oder Kühlmittels entsteht. Diese kann dann in den Tank zurückgeführt und dort oder in einer separaten Kondensationseinrichtung kondensiert und damit wieder in die flüssige Phase überführt werden. Zum anderen ermöglicht die Rückführung eine sehr schnelle und variable Abnahme des Extraktions- und/oder Kühlmittels von einer oder mehreren zu versorgenden Pressen, ohne dass die mindestens eine Hochdruckpumpe ständig anhand des tatsächlichen Bedarfs regeln zu müssen. Jede Verstellung der Hochdruckpumpe oder der Hochdruckpumpen birgt die Gefahr, dass das Extraktions- und/oder Kühlmittel aufgrund der sich ändernden Druck- oder Temperaturwerte ungewollt in die Gasphase übergeht, sodass ein möglichst kontinuierlicher Betrieb der Hochdruckpumpe bzw. der Hochdruckpumpen erstrebenswert ist.

Dementsprechend ist in vielen Ausführungsformen der Erfindung zumindest die Feineinstellung des Ausgangsdrucks der Druckreguliereinrichtung mithilfe mindestens eines Regelventils realisiert, da so eine häufige Anpassung der Ansteuerung der mindestens einen Hochdruckpumpe nicht erforderlich ist. Vorzugsweise ist das Regelventil als ein regelbares Rückschlagventil ausgebildet oder mit einem Rückschlagventil in Reihenschaltung kombiniert, um ein Rückströmen von Kühl- und/oder Extraktionsmittel zu verhindern.

In Ausführungsformen der Erfindung ist die Rückführleitung über ein Überdruckventil mit der Druckleitung verbunden, sodass das Kühl- und/oder Extraktionsmittel bei einem Druck oberhalb des Druckschwellwertes des Überdruckventils in die Rückführleitung strömt.

In besonders bevorzugten Ausführungsformen der Erfindung ist das Überdruckventil zusätzlich schaltbar, sodass das Ventil ereignisbasiert geöffnet oder geschlossen werden kann.

In besonders bevorzugten Ausführungsformen ist das Leitungssystem für das Kühl- und/oder Extraktionsmittel zumindest im Bereich des Tanks / des Speichers und zumindest in Teilen der Druckreguliereinrichtung als ein Ringleitungssystem realisiert.

Dadurch sind grundsätzlich beliebig viele Abnehmer für das Kühl- und/oder Extraktionsmittel an die Vorrichtung zur Bereitstellung von Kühl- und/oder Extraktionsmitteln anschließbar ohne weitere Hochdruckpumpen installieren zu müssen, durch die Rückführung des Kühl- und/oder Extraktionsmittels in den Tank wird kein Kühl- und/oder Extraktionsmittel beim Anfahren oder bei Störungen ungewollt freigesetzt, die zur Dosierung des Kühl- und/oder Extraktionsmittels auf die einzelnen Abnehmer erforderlichen Komponenten werden gemeinsam genutzt und dadurch wird die Anzahl der Komponenten bei gleicher Flexibilität und Variabilität reduziert. Letzteres geht zudem einher mit einer höheren Anlagen- und Arbeitssicherheit, da weniger Komponenten zum Einsatz kommen, die Störungspotential aufweisen.

In vorteilhaften Ausführungsformen der Erfindung ist mindestens ein Ablassventil in die Druckreguliereinrichtung integriert, über das beim Anfahren oder im Falle von Störungen Extraktions- und/oder Kühlmittel aus der Druckleitung ablassbar ist.

In bevorzugten Ausführungsformen der Erfindung ist das mindestens eine Ablassventil temperatur- und/oder druckabhängig schaltbar.

Die gewünschte Zuführtemperatur des Kühl- und/oder Extraktionsmittels ist in bevorzugten Ausführungsformen der Erfindung mithilfe einer Temperaturregeleinrichtung einstellbar. Je nach vorgesehenem Kühl- und/oder Extraktionsmittel ist die Temperatur mithilfe der beispielsweise einen Wärmetauscher und/oder eine Heizung aufweisenden Temperaturregeleinrichtung erhöhbar oder verringerbar.

Vorzugsweise weist die Temperaturregeleinrichtung eine Temperaturmesseinrichtung und zusätzlich einen Wärmetauscher und/oder eine Heizung auf, der/die anhand der Abweichung des Temperaturmesswerts vom Temperatursollwert von einer Temperatursteuereinrichtung entsprechend zur Einstellung der Temperatur auf den Sollwert ansteuerbar ist/sind.

Die Temperatur kann dabei vorzugsweise in Abhängigkeit von der zu verarbeitenden Ölsaat, der Temperatur der Ölsaat in der Presse und/oder des Durchsatzes geregelt werden
Die Dosiereinrichtung für das Kühl- und/oder Extraktionsmittel ist in bevorzugten Ausführungsformen der Erfindung als eine Regelstrecke ausgebildet.

Besonders vorzugsweise wird die Dosierung des Kühl- und/oder Extraktionsmittels mithilfe einer Regelung des Durchflusses realisiert. Dazu weist die Dosiereinrichtung eine Durchflussmesseinrichtung und ein Durchflussregelventil auf, das mithilfe einer Dosiersteuerung anhand der Abweichung des Durchflussmesswertes vom Durchflusssollwert entsprechend zur Einstellung des Durchflusses auf den Sollwert einstellbar ist.

Im Bereich der Dosiereinrichtung wird der Druck des Kühl- und/oder Extraktionsmittels in bevorzugten Ausführungsformen der Erfindung mit einem Druckhalteventil bzw. Überdruckventil stabil gehalten.

Über die Verteilungseinrichtung ist die Vorrichtung zur Bereitstellung von Kühl- und/oder Extraktionsmitteln mit mindestens einer Extraktionspresse zur Zufuhr des Kühl- und/oder Extraktionsmittels verbunden. Dazu weist die Verteilungseinrichtung ein entsprechendes Leitungssystem auf.

Vorzugsweise sind verschiedene Extraktionspressen jeweils mit mindestens einer eigenen Zuleitung an die Verteilungseinrichtung angebunden, wobei besonders bevorzugt jeder Extraktionspresse zumindest ein Absperrventil zugeordnet ist, sodass die Zuführung von Kühl- und/oder Extraktionsmittel individuell für jede angeschlossene Extraktionspresse durch entsprechende Ansteuerung der Absperrventile ein- oder ausschaltbar ist.

In vorteilhaften Ausführungsformen der Erfindung ist je zu versorgender Presse mindestens eine separate Versorgungsleitung vorgesehen, die an ein gemeinsame Druckreguliereinrichtung angeschlossen sind. Je Versorgungsstrang sind in Ausführungsformen der Erfindung individuelle Dosiereinrichtungen und ggf. zusätzlich individuelle Temperaturregeleinrichtungen vorgesehen, um die entsprechenden Parameter individuell je Presse einstellen zu können.

Im Bereich der Extraktionskammern der Extraktionspressen, bei Schneckenpressen auch Seiherkorb genannt, münden die Zuleitungen in Düsen, über die das Extraktionsmittel jeweils in die Extraktionskammer eingeleitet wird.

In Bezug auf die Verwendung von überkritischem Kohlendioxid als Extraktionsmittel gibt es zwei bevorzugte erfindungsgemäße Varianten, die in Abhängigkeit von der Anlagengröße angewendet werden können.

Gemäß der ersten Variante, die für typische Verwendungsgrößen in Höhe von 200 - 1.500 kg/h Kohlendioxid ausgelegt ist, erfolgt die Versorgung mit überkritischem Kohlendioxid mithilfe einer Hochdruckpumpe (z.B. ausgebildet als eine Kolbenpumpe), die in ein Ringleitungssystem eingebettet ist. Hier wird das flüssige Kohlendioxid aus einem Tank bei einem Druck in Höhe von etwa 10 - 20 bar g (Relativdruck) bei einer Temperatur in Höhe von etwa -20°C mithilfe einer Druckerhöhungspumpe abgeführt. Der Druck wird auf etwa 60 bar g erhöht. Dabei ist es wichtig, dass Druck und Temperatur leicht unter der kritischen Kennlinie des Kohlendioxids gehalten werden, um Kavitation und Blasenbildung zu vermeiden. Nach der Druckerhöhungspumpe wird ein Teilstrom zurück in den Tank geführt und ein Teilstrom versorgt die Hochdruckpumpe in der zweiten Stufe der Druckreguliereinrichtung.

Die Hochdruckpumpe erhöht den Druck auf 100 - 350 bar g. Auch dabei ist es wichtig, dass Druck und Temperatur leicht unter der kritischen Kennlinie des Kohlendioxids gehalten werden, um Kavitation und Blasenbildung zu vermeiden. Nach der Hochdruckpumpe wird ein Teilstrom zurück in den Tank geführt und ein Teilstrom versorgt die Kohlendioxid-Einspritzung, d.h. die Regelstrecke für Temperatur und Durchfluss in dem jeweiligen Strang des Zuleitungssystems.

Der Druck im Ringleitungssystem wird über eine Druckregelventil geregelt. Ein Sollwert wird vorgegeben.

Bei der Rückführung des Kohlendioxids in den Tank ist es wichtig, entstehende Gasformierungen durch Rückkühlung im oder vor dem Tank wieder in flüssiges Kohlendioxid umzuwandeln.

Der überkritische Zustand des Kohlendioxids wird durch eine Temperaturerhöhung im Hochdruckbereich, vorzugsweise im jeweiligen Zuführstrang, durch eine Erhöhung der Temperatur auf mehr als 31 °C, vorzugsweise auf eine Temperatur größer gleich 35 °C erreicht.

Besonders bevorzugt beträgt die Temperatur maximal etwa 60 °C.

Gemäß der zweiten Variante, die für typische Verwendungsgrößen in Höhe von 10 - 200 kg/h Kohlendioxid ausgelegt ist, erfolgt die Versorgung mit überkritischem Kohlendioxid einstufig mithilfe einer Hochdruckpumpe (z.B. ausgebildet als eine Kolbenpumpe).

Hier wird das flüssige Kohlendioxid aus einem Tank bei 10 - 20 bar g bei -20°C mit Hilfe einer Hochdruckpumpe abgeführt (100 - 350 bar g). Auch dabei ist es wichtig, dass Druck und Temperatur leicht unter der kritischen Kennlinie des Kohlendioxids gehalten werden, um Kavitation und Blasenbildung zu vermeiden. Hier ist keine Druckerhöhungspumpe von Nöten und auch keine Rückführung in den Tank.

Der Durchsatz wird über die Regelstrecke gegeben. Die Hochdruckpumpe regelt beispielsweise mit Hilfe eines Frequenzumformers oder ähnlichen Regeleinrichtungen den Druck.

Eine erfindungsgemäße Vorrichtung zum Pressen weist eine erfindungsgemäße Vorrichtung zur Bereitstellung von Kühl- und/oder Extraktionsmitteln auf.

Die mindestens eine Düse zur Einleitung des Kühl- und/oder Extraktionsmittels ist im Bereich der Extraktionskammer der Presse angeordnet.

Vorzugweise ist die mindestens eine Düse im Bereich einer oder mehrerer Entspannungszonen, beispielsweise jeweils hinter einem Drosselring, angeordnet.

Die Düse bzw. Düsen kann/können sowohl von außen in den Seiherkorb integriert sein, als an oder im Bereich der Schneckenwelle angeordnet sein.

In besonders bevorzugten Ausführungsformen der Erfindung ist die mindestens eine Düse mit einer Rückschlagklappe ausgerüstet, um ein Eindringen des Presskuchens und/oder Extrakts in die Düse zu verhindern. Dadurch wird ein Verstopfen der mindestens einen Düse vermieden.

In bevorzugten Ausführungsformen der Erfindung weist entweder die Vorrichtung zur Kühl- und/oder Extraktionsmitteln für mindestens eine Presse oder die Presse selbst ein Aspirationssystem auf, über das aus dem Innenraum der Presse entweichendes gasförmiges Kühl- und/oder Extraktionsmittel auffangbar ist.

Vorzugsweise umfasst das Aspirationssystem sowohl den Pressölraum als auch den Presskuchenraum. Diese aktive Entlüftung ist notwendig, um das austretende Kühl- und/oder Extraktionsmittel, beispielsweise Kohlendioxid, in der Konzentration zu verringern. Ungewolltes Ausströmen von Kühl- und/oder Extraktionsmittel in die Umgebung der Presse wird dadurch verhindert, sodass die Sicherheit in diesem Bereich arbeitender Personen gewährleistet werden kann.

Besonders bevorzugt ist das Aspirationssystem mit der Vorrichtung zur Bereitstellung von Kühl- und/oder Extraktionsmitteln für mindestens eine Presse elektrisch verschaltet, damit die Sicherheit jederzeit gewährleistet ist.

In vorteilhaften Ausführungsformen der Erfindung ist das Aspirationssystem mit einer Rückgewinnungseinrichtung für das Kühl- und/oder Extraktionsmittel ausgerüstet. Beispielsweise kann rückgewonnenes Kühl- und/oder Extraktionsmittel mithilfe einer Kondensationseinrichtung verflüssigt und dem Speicher wieder zugeführt werden, sodass das Kühl- und/oder Extraktionsmittel rezirkulierbar ist.

In vorteilhaften Ausführungsformen der Erfindung wir im Pressölraum ein Detektor für gasförmiges Kühl- und/oder Extraktionsmittel, beispielsweise ein Kohlendioxiddetektor, angeordnet, um ungewollte Austritte des Kühl- und/oder Extraktionsmittels (z.B. durch geplatzte Leitungen oder Pressdruckverlust in der CO2-Kammer) sofort zu ermitteln und die Regelung- und Versorgung mit dem Kühl- und/oder Extraktionsmittel zu stoppen bzw. zu minimieren. Diese Verschaltung ist vorzugsweise elektrisch ausgeführt und kann den Prozess direkt beeinflussen.

Ein erfindungsgemäßes Verfahren zur Bereitstellung von Kühl- und/oder Extraktionsmitteln für mindestens eine Presse umfasst zumindest die folgenden Verfahrensschritte:
- Bereitstellung eines Kühl- und/oder Extraktionsmittels in einem Speicher
- Erhöhen des Drucks des Kühl- und/oder Extraktionsmittels mithilfe einer Druckreguliereinrichtung
- Einstellen der Temperatur des Kühl- und/oder Extraktionsmittels mithilfe mindestens einer Temperaturregeleinrichtung
- Dosieren des Kühl- und/oder Extraktionsmittel mithilfe mindestens einer Dosiereinrichtung

In Ausführungsformen der Erfindung wird der Gewichtsanteil des Kühl- und/oder Extraktionsmittels so dosiert, dass die einer Presse zugeführte Menge höchstens dem Gewichtsanteil des im Pressgut enthaltenen Extrakts entspricht.

In bevorzugten Ausführungsformen der Erfindung wird der Gewichtsanteil des Kühl- und/oder Extraktionsmittels so dosiert, dass die einer Presse zugeführte Menge etwa 50 % des Gewichts des im Pressgut enthaltenen Extrakts beträgt.

Eine überwiegende Lösung des Extraktionsmittels im Extrakt bei einem geringen Überschuss an Extraktionsmittel zur Bereitstellung eines Gasdruckes wird dadurch erreicht, dass das Kühl- und/oder Extraktionsmittel dem Pressgut mit einem Gewichtsanteil zugeführt wird, der etwa 25 bis 35 % des Gewichts des im Pressgut enthaltenen Extrakts beträgt.

Ein typischer Druckbereich wird dadurch definiert, dass das Extraktionsmittel dem Pressgut mit einem Druck von etwa 100 bis 350 bar zugeführt wird.

Insbesondere ist daran gedacht, dass das Extraktionsmittel dem Pressgut mit einem Druck von etwa 150 bar zugeführt wird.

Typische Betriebsbedingungen werden dadurch definiert, dass das Abpressen des Extrakts nach der Zufuhr des Extraktionsmittels mit einer Temperatur von etwa 35 bis 60 °C erfolgt. Aufgrund der durch das mechanische Pressen erzeugten Reibungsenergie stellt sich in der Regel ein Temperaturbereich derart ein, dass das Abpressen des Extrakts nach der Zufuhr des Extraktionsmittels mit einer Temperatur von etwa 40 bis 45 Grad Celsius erfolgt.

Durch einen typischen mechanischen Pressdruck wird dafür gesorgt, dass ein mechanischer Pressdruck im Bereich von 200 bis 300 bar erzeugt wird.

Eine gesteigerte Extraktausbeute kann dadurch erreicht werden, dass das Pressgut hintereinander mehreren Abpressschritten unterworfen wird.

Insbesondere erweist es sich als vorteilhaft, dass das Pressgut in einem ersten Pressschritt mechanisch vorgepresst wird.

Ebenfalls ist es zweckmäßig, dass das Pressgut nach dem Vorpressen mit Extraktionsmittel versetzt und das Extraktionsmittel mindestens teilweise im Extrakt gelöst wird.

Eine typische Verfahrensdurchführung erfolgt derart, dass nach dem Lösen des Extraktionsmittels im Extrakt ein Abpressen durchgeführt wird.

Eine nochmals gesteigerte Extraktausbeute kann dadurch erreicht werden, dass das mit dem Extraktionsmittel versetzte Extrakt mindestens zweimal einer Drucksteigerung sowie einer Druckabsenkung unterworfen wird.

Gemäss dem erfindungsgemässen Verfahren wird eine erfindungsgemäße Vorrichtung zur Bereitstellung von Kühl- und/oder Extraktionsmitteln für mindestens eine Presse verwendet.

Die weiteren Verfahrensschritte bzw. die Details der Verfahrensschritte entsprechen in den jeweiligen Ausführungsformen dem fachgerechten Einsatz der im Zuge dieser Beschreibung offenbarten Komponenten der jeweiligen Ausführungsformen der Vorrichtung zur Bereitstellung von Kühl- und/oder Extraktionsmitteln für mindestens eine Presse.

Durch das Zusammenwirken der erfindungsgemäßen Funktionseinheiten wird somit eine konstante und fehlerfreie Versorgung mindestens einer Presse mit Kühl- und/oder Extraktionsmittel ermöglicht.

Dadurch werden die positiven Effekte auf das Pressergebnis sichergestellt. Diese Effekte sind weiterhin eine Erhöhung der Entölung bei Ölsaaten (höhere Ausbeute), eine Kühlung beim Pressenvorgang und dadurch Erhaltung der Proteinlöslichkeit im Presskuchen (höhere Qualität), eine Erhöhung der Qualität des abgepressten Öles (niedrige freie Fettsäuren, Verringerung der Phosphorlipide im Öl, Erhaltung der Vitamine im Öl, Verringerung der Bitterstoffe im Öl je nach Ölsaat und Anwendung; alles je nach Ölsaat und Anwendung).

In den nachfolgend erläuterten Figuren sind beispielhafte Ausführungsformen der Erfindung dargestellt. Es zeigen:
- Figur 1:: Eine schematische Darstellung einer Schneckenpresse mit einer erfindungsgemäßen Vorrichtung zur Bereitstellung von Kühl- und/oder Extraktionsmitteln und
- Figur 2:: Ein Blockdiagramm einer erfindungsgemäßen Vorrichtung zur Bereitstellung von Kühl- und/oder Extraktionsmitteln mit einer verbundenen Presse.

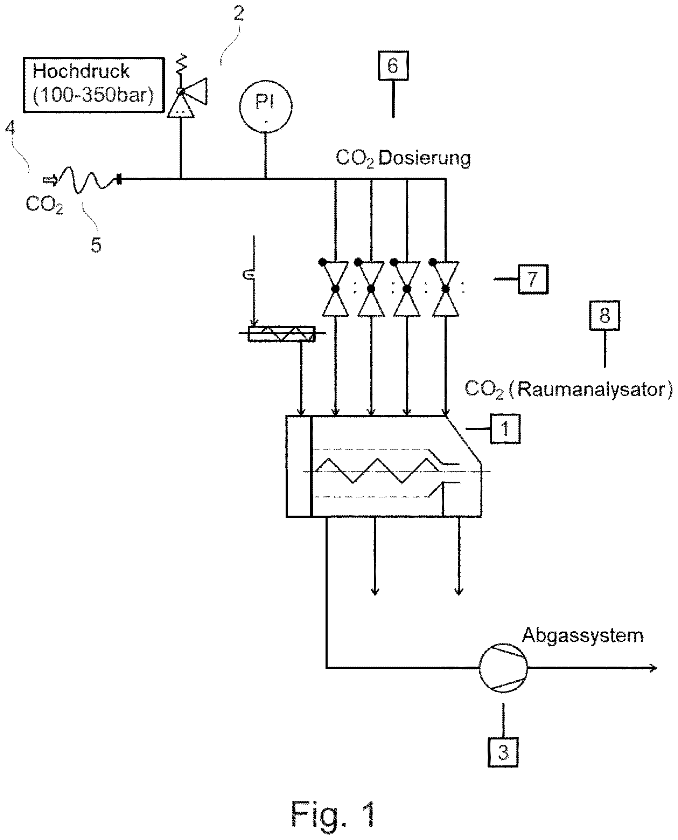

In Figur 1 ist eine als eine Schneckenpresse ausgebildete Vorrichtung zum Pressen (1) mit einer erfindungsgemäßen Vorrichtung zur Bereitstellung von Kühl- und/oder Extraktionsmitteln (2) schematisch dargestellt. Weiterhin ist die Vorrichtung zum Pressen (1) mit einem Aspirationssystem (3) zum Absaugen austretender Gase, insbesondere von gasförmigem Kühl- und/oder Extraktionsmittel, ausgerüstet. Das Extraktionsmittel ist in der dargestellten Ausführungsform der Erfindung durch (überkritisches) Kohlendioxid (CO2) gegeben.

Die Vorrichtung zur Bereitstellung von Kühl- und/oder Extraktionsmitteln (2) weist einen Speicher (4) für Kühl- und/oder Extraktionsmittel, eine Druckreguliereinrichtung (5) zur Einstellung des gewünschten Drucks für das Kühl- und/oder Extraktionsmittel, eine Dosiereinrichtung (6) zur Dosierung des Kühl- und/oder Extraktionsmittels und eine Verteilungseinrichtung (7) zur Verteilung des Kühl- und/oder Extraktionsmittels auf.

Die Vorrichtung zum Pressen (1) ist darüber hinaus mit einem Detektor (8) für gasförmiges Kühl- und/oder Extraktionsmittel, vorliegend ausgebildet als ein CO2-Detektor, ausgerüstet.

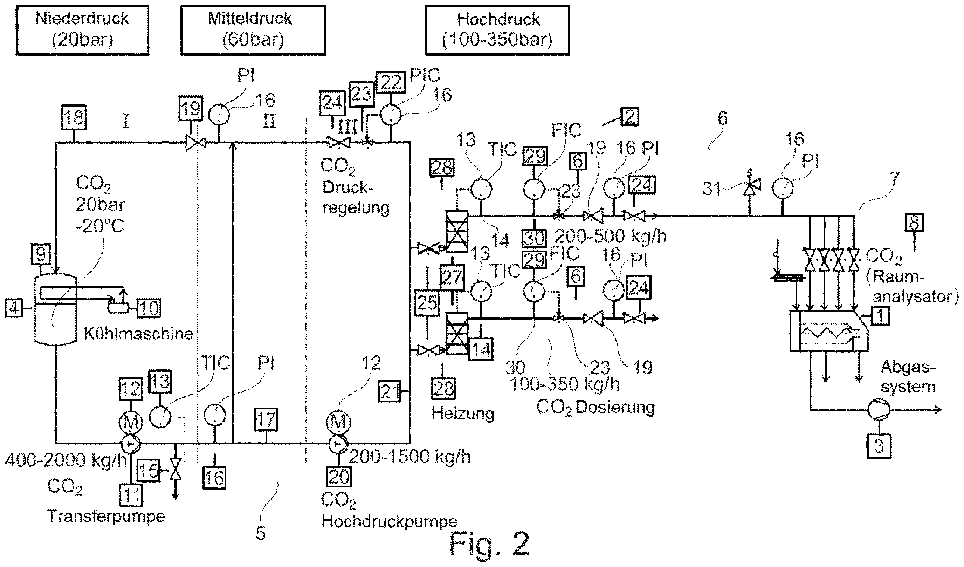

Figur 2 zeigt in einem Blockdiagramm eine erfindungsgemäße Ausführungsform einer Vorrichtung zur Bereitstellung von Kühl- und/oder Extraktionsmitteln (2). Auch in dieser Darstellung ist das Extraktionsmittel durch (überkritisches) Kohlendioxid gegeben.

Die Vorrichtung zur Bereitstellung von Kühl- und/oder Extraktionsmitteln (2) weist einen Speicher (4) auf, in dem das Kühl- und/oder Extraktionsmittel bei einem geeigneten Druck und einer geeigneten Temperatur, vorliegend bei einem Druck von etwa 20 bar und einer Temperatur von etwa -20 °C, bevorratet ist. Dieser Bereich ist der Niederdruckbereich (I). In vielen Anwendungen ist es wünschenswert, das Kühl- und/oder Extraktionsmittel in einem flüssigen Zustand zu bevorraten, sodass Druck und Temperatur entsprechend zu wählen sind.

Die Vorrichtung zur Bereitstellung von Kühl- und/oder Extraktionsmitteln (2) weist in der dargestellten Ausführungsform eine mit dem Speicher (4) gekoppelte Kondensationsvorrichtung (9) auf. Die Kondensationsvorrichtung (9) weist eine Kühlvorrichtung (10) auf, mit der insbesondere gasförmiges Kühl- und/oder Extraktionsmittel zur Kondensation kühlbar ist.

Mit dem Speicher (4) über eine Leitung verbunden ist eine Druckerhöhungspumpe (11), die einen steuerbaren Pumpenantrieb (12) aufweist. Die Druckerhöhungspumpe (11) ist in der gezeigten Ausführungsform zur Handhabung eines Durchsatzes von etwa 400 bis 2000 kg/h Kühl- und/oder Extraktionsmittel und zur Erhöhung des Drucks des Kühl- und/oder Extraktionsmittels auf etwa 60 bar ausgelegt. Dieser Bereich ist der Mitteldruckbereich (II).

Im Mitteldruckbereich (II) schließt sich eine Druckleitung (17) an die Druckerhöhungspumpe (11) an. Weiterhin ist im Mitteldruckbereich (II) ein temperaturgesteuerter Regelkreis (13) angeordnet, der mithilfe einer Temperaturmesseinrichtung (14) die Temperatur des Kühl- und/oder Extraktionsmittels im Mitteldruckbereich (II) erfasst und im Bedarfsfall ein Ablassventil (15) öffnet. Beispielsweise ist dies beim Anfahren oder in Störfällen hilfreich. Weiterhin sind im Mitteldruckbereich (II) Druckmesseinrichtungen (16) angeordnet, mit denen die Einhaltung der gewünschten Druckgrenzwerte überprüfbar ist.

Über ein Überdruckventil (19) ist die Druckleitung (17) des Mitteldruckbereichs (II) mit einer Rückführleitung (18) verbunden, die in die Kondensationseinrichtung (9) mündet und über diese mit dem Speicher (4) verbunden ist. Im Mitteldruckbereich ist somit eine erste Ringleitung ausgebildet.

Weiterhin ist mit der Druckleitung (17) des Mitteldruckbereichs (II) eine Hochdruckpumpe (20) eingangsseitig verbunden. Die Hochdruckpumpe (20) ist in der gezeigten Ausführungsform zur Handhabung eines Durchsatzes von etwa 200 bis 1500 kg/h Kühl- und/oder Extraktionsmittel und zur Erhöhung des Drucks des Kühl- und/oder Extraktionsmittels auf etwa 300 bar ausgelegt. Dieser Bereich ist der Hochdruckbereich (III). Geeignete Drücke im Hochdruckbereich (III) sind etwa 100 bis 350 bar.

Im Hochdruckbereich (III) schließt sich ausgangsseitig eine Hochdruckleitung (21) and die Hochdruckpumpe (20) an. Weiterhin ist im Hochdruckbereich (III) ein Druckregelkreis (22) angeordnet, der mithilfe einer Druckmesseinrichtung (16) den Druck im Hochdruckbereich (III) misst und entsprechend den Druck auf den Sollwert regelt, indem ein Regelventil (23) angesteuert wird, über das Kühl- und/oder Extraktionsmittel zur Reduzierung des Drucks im Hochdruckbereich (III) zurück in den Mitteldruckbereich (II) leitbar ist. Das Regelventil (23) ist mit einem Rückschlagventil (24) kombiniert, sodass auch in einem Störungsfall an dieser Stelle kein Kühl- und/oder Extraktionsmittel aus dem Mitteldruckbereich (II) in den Hochdruckbereich (III) strömen kann. Über diese Rückführung in den Mitteldruckbereich (II) ist eine zweite Ringleitung realisiert.

Mit der Hochdruckleitung (21) sind jeweils über ein Absperrventil (25) zwei Versorgungsstränge verbunden.

Jeder der Stränge weist eine Temperaturregeleinrichtung (28) zur Einstellung der Temperatur des Kühl- und/oder Extraktionsmittels und eine Dosiereinrichtung (6) zur Einstellung der Abgabemenge des Kühl- und/oder Extraktionsmittels auf.

Die Temperaturregeleinrichtungen (28) weisen jeweils einen Temperaturregelkreis (13) auf, der mithilfe einer Temperaturmesseinrichtung (4) die Temperatur des Kühl- und/oder Extraktionsmittels bestimmen und entsprechend bei Abweichungen des Temperaturmesswerts vom Temperatursollwert einen Wärmetauscher (27) zur Beeinflussung der Temperatur des Kühl- und/oder Extraktionsmittels ansteuern kann.

In der gezeigten Ausführungsform sind die Wärmetauscher als Heizungen mit einer Heizleistung 20 kW von ausgebildet.

Die Dosiereinrichtungen (6) weisen je einen Durchflussregelkreis (29) auf, der mithilfe einer Durchflussmesseinrichtung (29) den Durchfluss des Kühl- und/oder Extraktionsmittels bestimmen und entsprechend bei Abweichungen des Durchflussmesswerts vom Durchflusssollwert ein Regelventil (23) zur Beeinflussung des Durchflusses des Kühl- und/oder Extraktionsmittels ansteuern kann.

In der gezeigten Ausführungsform ist die Dosiereinrichtung (6) eines ersten Versorgungsstrangs zur Dosierung des Durchflusses in einem Bereich von 200 bis 500 kg/h Kühl- und/oder Extraktionsmittel ausgelegt. Die Dosierungseinrichtung (6) eines zweiten Versorgungsstrangs ist zur Dosierung des Durchflusses in einem Bereich von 100 bis 350 kg/h Kühl- und/oder Extraktionsmittel ausgelegt.

Vorzugsweise ist je angeschlossener Presse mindestens ein separater Versorgungsstrang vorgesehen, sodass die Menge des jeweils bereitgestellten Extraktionsmittels individuell für jede Presse steuerbar ist.

In jedem der Versorgungsstränge sind in Flussrichtung des Kühl- und/oder Extraktionsmittels hinter der Dosiereinrichtung (6) ein Überdruckventil (19), eine Druckmesseinrichtung (16) und ein Rückschlagventil (24) angeordnet. Daran schließt sich die Verteilungseinrichtung (7) an, die die entsprechenden Hochdruckleitungen zu den einzelnen Pressen umfasst.

In der dargestellten Ausführungsform ist die Verteilungseinrichtung (7) als verbindendes Leitungssystem zwischen dem ersten Versorgungsstrang der Vorrichtung zur Bereitstellung von Kühl- und/oder Extraktionsmittel (2) und einer Presse (1), ausgebildet als eine Schneckenpresse, ausgebildet. In die Verteilungseinrichtung (7) integriert sind ein Sicherheitsventil (31) und eine Druckmesseinrichtung (16).

Die Presse (1) weist vier Düsen zur Einleitung des Kühl- und/oder Extraktionsmittels in den Pressraum auf, die jeweils mit einem Rückschlagventil ausgerüstet sind.

Die angegebenen Drücke und Temperaturen sind in der gezeigten Ausführungsform auf Kohlendioxid als Extraktionsmittel ausgelegt. Bei der Verwendung anderer Kühl- und/oder Extraktionsmittel sind diese ggf. entsprechend anzupassen.

## Patentansprüche

1. Vorrichtung zur Bereitstellung von Kühl- und/oder Extraktionsmitteln (2) für mindestens eine Presse (1) aufweisend mindestens einen Speicher (4) für das Kühl- und/oder Extraktionsmittel, eine Druckreguliereinrichtung (5) für das Kühl- und/oder Extraktionsmittel, eine Temperaturregeleinrichtung (28) und eine Dosiereinrichtung (6) für das Kühl- und/oder Extraktionsmittel, wobei die Druckreguliereinrichtung (5) ein- oder mehrstufig ausgebildet ist, **dadurch gekennzeichnet, dass** die Vorrichtung einer Verteilungseinrichtung (7) für das Kühl- und/oder Extraktionsmittel aufweist und dass die Druckreguliereinrichtung (5) eine Hochdruckpumpe aufweist.

2. Vorrichtung (2) nach Anspruch 1, **dadurch gekennzeichnet, dass** die Druckreguliereinrichtung (5) mindestens zweistufig aufgebaut ist.

3. Vorrichtung (2) nach einem der Ansprüche 1 und 2, **dadurch gekennzeichnet, dass** die Druckreguliereinrichtung (5) mindestens eine Druckerhöhungspumpe (11) und mindestens eine Hochdruckpumpe (20) aufweist.

4. Vorrichtung (2) nach einem der Ansprüche 1 bis 3, **dadurch gekennzeichnet, dass** diese eine Ringleitung aufweist, die eine Rückführleitung (18) zur Rückführung von Kühl- und/oder Extraktionsmittel zum Speicher (4) umfasst.

5. Vorrichtung (2) nach einem der Ansprüche 1 bis 4, **dadurch gekennzeichnet, dass** die Druckreguliereinrichtung (5) zumindest zur Feinregelung des Druckes einen Druckregelkreis (22) aufweist, der ein Regelventil (23) umfasst und dessen Ansteuerung derart ausgebildet ist, dass dieses zur Absenkung und Einstellung des Druckes auf einen Drucksollwert öffenbar ist.

6. Vorrichtung (2) nach einem der Ansprüche 1 bis 5, **dadurch gekennzeichnet, dass** die Dosiereinrichtung (6) einen Durchflussregelkreis (2) umfasst.

7. Vorrichtung (2) nach einem der Ansprüche 1 bis 6, **dadurch gekennzeichnet, dass** je angeschlossener Presse (1) mindestens ein individueller Versorgungsstrang vorgesehen ist.

8. Vorrichtung (2) nach Anspruch 7, **dadurch gekennzeichnet, dass** jeder Versorgungsstrang eine individuelle Temperaturregeleinrichtung (28) und eine individuelle Dosiereinrichtung (6) aufweist.

9. Vorrichtung (2) nach einem der Ansprüche 1 bis 8, **dadurch gekennzeichnet, dass** diese eine Kondensationseinrichtung (9) zur Kondensierung von gasförmigem Kühl- und/oder Extraktionsmittel aufweist.

10. Vorrichtung zum Pressen (1), **dadurch gekennzeichnet, dass** diese eine Vorrichtung zur Bereitstellung von Kühl- und/oder Extraktionsmitteln (2) nach einem der Ansprüche 1 bis 9 aufweist.

11. Vorrichtung zum Pressen (1) nach Anspruch 10, **dadurch gekennzeichnet, dass** diese mindestens eine Düse zur Einleitung des Kühl- und/oder Extraktionsmittels in den Pressraum aufweist.

12. Vorrichtung zum Pressen (1) nach Anspruch 11, **dadurch gekennzeichnet, dass** die mindestens eine Düse eine Rückschlagklappe aufweist.

13. Verfahren zur Bereitstellung von Kühl- und/oder Extraktionsmitteln für mindestens eine Presse (1) unter Verwendung einer Vorrichtung gemäss einem der Patentansprüche 1 bis 9 umfassend die Verfahrensschritte
∘ Bereitstellung eines Kühl- und/oder Extraktionsmittels in einem Speicher (4),
∘ Erhöhen des Drucks des Kühl- und/oder Extraktionsmittels mithilfe einer als Druckreguliereinrichtung (5) ausgebildeten Hochdruckpumpe,
∘ Einstellen der Temperatur des Kühl- und/oder Extraktionsmittels mithilfe mindestens einer Temperaturregeleinrichtung (28),
∘ Dosieren des Kühl- und/oder Extraktionsmittel mithilfe mindestens einer Dosiereinrichtung (6).

## Claims

1. Device for providing cooling and/or extraction means (2) for at least one press (1), having at least one reservoir (4) for the cooling and/or extraction means, a pressure control device (5) for the cooling and/or extraction means, a temperature control device (28) and a dosing device (6) for the cooling and/or extraction means, the pressure control device (5) being of single-stage or multi-stage design, **characterized in that** the device has a distribution device (7) for the cooling and/or extraction means and **in that** the pressure control device (5) has a high-pressure pump.

2. Device (2) according to claim 1, **characterized in that** the pressure control device (5) has at least two stages.

3. Device (2) according to one of claims 1 and 2, **characterized in that** the pressure control device (5) comprises at least one booster pump (11) and at least one high-pressure pump (20).

4. Device (2) according to one of claims 1 to 3, **characterized in that** it has an annular line which comprises a return line (18) for returning coolant and/or extraction means to the reservoir (4).

5. Device (2) according to one of claims 1 to 4, **characterized in that** the pressure control device (5), at least for fine regulation of the pressure, has a pressure control circuit (22), which comprises a regulating valve (23) and the actuator of which is designed in such a way that it can be opened to lower and set the pressure to a pressure target value.

6. Device (2) according to one of claims 1 to 5, **characterized in that** the dosing device (6) comprises a flow control circuit (2).

7. Device (2) according to one of claims 1 to 6, **characterized in that** each connected press (1) is provided with at least one individual supply line.

8. Device (2) according to claim 7, **characterized in that** each supply line has an individual temperature control device (28) and an individual dosing device (6).

9. Device (2) according to one of claims 1 to 8, **characterized in that** it comprises a condensation device (9) for condensing gaseous cooling and/or extraction means.

10. Device for pressing (1), **characterized in that** it comprises a device for providing cooling and/or extraction means (2) according to any one of claims 1 to 9.

11. Device for pressing (1) according to claim 10, **characterized in that** it comprises at least one nozzle for introducing the cooling and/or extraction means into the pressing chamber.

12. Device for pressing (1) according to claim 11, **characterized in that** the at least one nozzle has a non-return flap.

13. Method for providing cooling and/or extraction means for at least one press (1) using a device according to any one of claims 1 to 9, comprising the steps of
∘ Provision of a cooling and/or extraction means in a reservoir (4),
∘ Increasing the pressure of the cooling and/or extraction means using a high-pressure pump designed as a pressure control device (5),
∘ Adjusting the temperature of the cooling and/or extraction means using at least one temperature control device (28),
∘ Dosing of the cooling and/or extraction means with the aid of at least one dosing device (6).

## Revendications

1. Dispositif de fourniture d'agents de refroidissement et/ou d'extraction (2) destinés à au moins une presse (1), le dispositif comportant au moins un accumulateur (4) destiné à l'agent de refroidissement et/ou d'extraction, un module de régulation de pression (5) destiné à l'agent de refroidissement et/ou d'extraction, un module de régulation de température (28) et un module de dosage (6) destiné à l'agent de refroidissement et/ou d'extraction, le module de régulation de pression (5) étant conçu en un ou plusieurs étages, **caractérisé en ce que** le dispositif comporte un module de distribution (7) destiné à l'agent de refroidissement et/ou d'extraction et **en ce que** le module de régulation de pression (5) comporte une pompe à haute pression.

2. Dispositif (2) selon la revendication 1, **caractérisé en ce que** le module de régulation de pression (5) est construit sur au moins deux étages.

3. Dispositif (2) selon l'une des revendications 1 et 2, **caractérisé en ce que** le module de régulation de pression (5) comporte au moins une pompe d'élévation de pression (11) et au moins une pompe à haute pression (20) .

4. Dispositif (2) selon l'une des revendications 1 à 3, **caractérisé en ce qu'**il comporte une conduite annulaire qui comprend une conduite de retour (18) destinée à ramener l'agent de refroidissement et/ou d'extraction à l'accumulateur (4).

5. Dispositif (2) selon l'une des revendications 1 à 4, **caractérisé en ce que**, au moins pour effectuer une régulation fine de la pression, le module de régulation de pression (5) comporte un circuit de régulation de pression (22) qui comporte une soupape de régulation (23) et dont la commande est conçue de manière à pouvoir ouvrir celle-ci afin d'abaisser et de régler la pression à une valeur de pression cible.

6. Dispositif (2) selon l'une des revendications 1 à 5, **caractérisé en ce que** le module de dosage (6) comprend un circuit de régulation de débit (2).

7. Dispositif (2) selon l'une des revendications 1 à 6, **caractérisé en ce qu'**au moins une voie d'alimentation individuelle est prévue pour chaque presse connectée (1).

8. Dispositif (2) selon la revendication 7, **caractérisé en ce que** chaque voie d'alimentation comporte un module de régulation de température individuel (28) et un module de dosage individuel (6).

9. Dispositif (2) selon l'une des revendications 1 à 8, **caractérisé en ce qu'**il comporte un module de condensation (9) destiné à condenser l'agent de refroidissement et/ou d'extraction gazeux.

10. Dispositif de pressage (1), **caractérisé en ce qu'**il comporte un dispositif de fourniture d'agents de refroidissement et/ou d'extraction (2) selon l'une des revendications 1 à 9.

11. Dispositif de pressage (1) selon la revendication 10, **caractérisé en ce qu'**il comporte au moins une buse destinée à introduire l'agent de refroidissement et/ou d'extraction dans l'espace de pressage.

12. Dispositif de pressage (1) selon la revendication 11, **caractérisé en ce que** l'au moins une buse comporte un clapet anti-retour.

13. Procédé de fourniture d'agents de refroidissement et/ou d'extraction destinés à au moins une presse (1) à l'aide d'un dispositif selon l'une des revendications 1 à 9, ledit procédé comprenant les étapes suivantes :
∘ fournir un agent de refroidissement et/ou d'extraction dans un accumulateur (4),
∘ augmenter la pression de l'agent de refroidissement et/ou d'extraction à l'aide d'une pompe à haute pression conçue comme un module de régulation de pression (5),
∘ régler la température de l'agent de refroidissement et/ou d'extraction à l'aide d'au moins un module de régulation de température (28),
∘ doser l'agent de refroidissement et/ou d'extraction à l'aide d'au moins un module de dosage (6) .
